# EUROPÄISCHE PATENTANMELDUNG

(11) **EP 4 403 008 A1**
(43) Veröffentlichungstag der Anmeldung: **24.07.2024**
(21) Anmeldenummer: 24401002.1
(22) Anmeldetag: 09.01.2024
(51) Int. Cl.: A01B 39/18, A01B 69/00, A01M 21/00

(54) **LANDWIRTSCHAFTLICHES GERÄT MIT WINDAUSGLEICH**

(30) Priorität: 20.01.2023 DE 102023101389
(71) Anmelder: Amazonen-Werke H. Dreyer SE & Co. KG, 49205 Hasbergen (DE)
(72) Erfinder: Lenz, Tino, 49205 Hasbergen (DE)

(57) **Zusammenfassung**

Die Erfindung betrifft ein landwirtschaftliches Gerät (1) zur Behandlung von in Pflanzreihen (R) angebauten Nutzpflanzen (N) mit einem mehrere Behandlungswerkzeuge (2) aufweisenden, quer zu den Pflanzreihen (R) bewegbar ausgebildeten Werkzeugrahmen (3), dessen Position gegenüber den Pflanzreihen (R) über einen ein Positionssignal (S_{P}) bereitstellenden Pflanzreihensensor (5) erfassbar und über eine Positionseinstellung (4) einstellbar ist, wobei die Positionseinstellung (4) mit einer Windüberwachung (6) verbunden ist, welche ein Windsignal (Sw) bereitstellt, das zur Kompensation von Windeinflüssen mit dem Positionssignal (S_{P}) verknüpfbar ist.

## Beschreibung

Die vorliegende Erfindung betrifft ein landwirtschaftliches Gerät zur Behandlung von in Pflanzreihen angebauten Nutzpflanzen mit einem mehrere Behandlungswerkzeuge aufweisenden, quer zu den Pflanzreihen bewegbar ausgebildeten Werkzeugrahmen, dessen Position gegenüber den Pflanzreihen über einen ein Positionssignal bereitstellenden Pflanzreihensensor erfassbar und über eine Positionseinstellung einstellbar ist. Ein weiterer Gegenstand der Erfindung ist ein Verfahren zur Behandlung von in Pflanzreihen angebauten Nutzpflanzen.

Landwirtschaftliche Nutzpflanzen, wie beispielsweise Getreide- oder Gemüsepflanzen, werden üblicherweise in sich mit einem gewissen Abstand parallel zueinander erstreckenden Pflanzreihen auf landwirtschaftlichen Nutzflächen, beispielsweise Äckern oder Feldern, angebaut.

Zur Sicherstellung qualitativ hochwertiger Ernten mit hohen Erträgen werden die in Pflanzreihen angebauten Nutzpflanzen nach der Aussaat bzw. dem Anpflanzen oftmals mit verschiedensten landwirtschaftlichen Geräten behandelt. Die Behandlung dient hierbei in der Regel dem Pflanzenschutz und/oder der Unterstützung des Pflanzenwachstums. Je nach Nutzpflanze, Behandlungszweck sowie den vorherrschenden Umgebungsbedingungen werden unterschiedliche landwirtschaftliche Geräte eingesetzt. Hierbei kann es sich etwa um mechanisch arbeitende Geräte handeln, beispielsweise um in die Nutzfläche eingreifende Hackgeräte zur Entfernung von zwischen den Pflanzreihen wachsenden Unkräutern. Alternativ oder zusätzlich kommen oftmals auch Geräte zur chemischen Behandlung der Nutzpflanzen zum Einsatz, mit welchen etwa Pflanzenschutzmittel auf die Nutzpflanzen aufgebracht werden können.

Solche landwirtschaftlichen Geräte weisen in der Regel mehrere Behandlungswerkzeuge auf, welche üblicherweise an einem gemeinsamen Werkzeugrahmen angebracht sind. Oftmals sind die Behandlungswerkzeuge so an dem Werkzeugrahmen angeordnet, dass mehrere Pflanzreihen gleichzeitig bearbeitet bzw. behandelt werden können.

Zur Sicherstellung eines sowohl effektiven als auch pflanzenschonenden Einsatzes der Geräte ist es im Stand der Technik bekannt, den Werkzeugrahmen mit den daran angeordneten Behandlungswerkzeugen, insbesondere quer zu den Pflanzreihen, bewegbar auszugestalten. Hierdurch können die Behandlungswerkzeuge während der Behandlung in gewissem Maße unabhängig von der Positionierung des Geräts auf die lokalen Positionen und Verläufe der Pflanzreihen, welche auf realen Nutzflächen oftmals nicht ideal gerade verlaufen, sondern Schwankungen unterliegen, eingestellt werden. Dies ist etwa bei Hackgeräten von Vorteil, da hier eine Bodenbearbeitung möglichst nah an der Austrittsstelle des Nutzpflanze aus der Nutzfläche wünschenswert ist. Ferner kann über eine Bewegbarkeit des Werkzeugrahmens, beispielsweise auch eine Hanglage der Nutzfläche, kompensiert werden.

In einer einfachen Ausführung solcher Geräte muss das Bedienpersonal die lokalen Positionen und Verläufe der Pflanzreihen selbst erfassen und den Werkzeugrahmen entsprechend über eine manuelle Steuerung relativ zu den Pflanzreihen einstellen. Zur Entlastung des Bedienpersonals und zur Vermeidung von Fehlpositionierungen der Behandlungswerkzeuge ist es bei qualitativ hochwertigen landwirtschaftlichen Geräten bekannt, die Positionen und Verläufe der Pflanzreihen automatisch zu erfassen. Die für eine automatische Positionseinstellung des Werkzeugrahmens gegenüber den Pflanzreihen erforderlichen Positionssignale können dabei etwa aus Positionsaufzeichnungen während der Aussaat oder während vorheriger Behandlungsmaßnahmen stammen oder auch satellitengestützt erzeugt werden. Im Stand der Technik verbreitet sind Ausgestaltungen, bei denen die Pflanzreihen mittels an dem Gerät angeordneten Pflanzreihensensoren erfasst werden, welche beispielsweise die Position der Oberseite der Nutzpflanzen optisch detektieren. Ein solches Verfahren ist zum Beispiel in der DE 10 2020 114 970 A1 beschrieben.

In der landwirtschaftlichen Praxis haben sich solche Geräte, bei welchen ein Positionssignal von einem Pflanzreihensensor erzeugt und zur automatischen Positionseinstellung des Werkzeugrahmens verwendet wird, durchaus bewährt. Allerdings kann es auch bei solchen Geräten unter ungünstigen Behandlungsbedingungen zu Fehlpositionierungen bei der automatischen Positionseinstellung relativ zu den Pflanzreihen kommen. Insbesondere hoch gewachsene, biegeweiche Pflanzen werden unter Windeinfluss oftmals stark ausgelenkt. Die optische Erfassung der Pflanzenoberseite kann in einem solchen Fall zu einer Fehlpositionierung führen, da eine Abweichung zwischen der Position der windbedingt ausgelenkten Pflanzenoberseite und deren Austrittstelle aus der Nutzfläche in der Pflanzreihe besteht. Eine Positionseinstellung des Werkzeugrahmens auf Grundlage der erfassten, ausgelenkten Pflanzenoberseite kann zu Fehlpositionierungen der Behandlungswerkzeuge führen, welche im Extremfall zu unbeabsichtigten Beschädigungen der Nutzpflanzen führen können.

Vor diesem Hintergrund stellt sich die Erfindung die **Aufgabe** , ein landwirtschaftliches Gerät anzugeben, bei welchem eine zuverlässige Positionseinstellung des Werkzeugrahmens sichergestellt ist, so dass Fehlpositionierungen der Behandlungswerkzeuge auch unter Windeinfluss vermindert werden können.

Diese Aufgabe wird bei einem landwirtschaftlichen Gerät der eingangs genannten Art durch die Merkmale des Anspruchs 1 **gelöst**. Vorteilhafte Weiterbildungen sind in den abhängigen Unteransprüchen angegeben.

Die Positionseinstellung ist zur Sicherstellung eines zuverlässigen Betriebs des Geräts mit einer Windüberwachung verbunden, welche ein Windsignal bereitstellt, das zur Kompensation von Windeinflüssen mit dem Positionssignal verknüpfbar ist. Durch eine solche Ausgestaltung lassen sich windbedingte Fehlpositionierungen der Behandlungswerkzeuge zuverlässig reduzieren oder sogar vollständig verhindern.

In einer vorteilhaften Weiterbildung der Erfindung umfasst das von der Windüberwachung bereitgestellte Windsignal die Windgeschwindigkeit des auf die Pflanzreihen wirkenden Winds, insbesondere die Windgeschwindigkeit des quer zu den Pflanzreihen wirkenden Anteils des Winds. Die Auslenkung der Nutzpflanzen ist oftmals proportional zur Windgeschwindigkeit, weshalb die Erfassung der Windgeschwindigkeit eine wichtige Voraussetzung für eine zuverlässige Kompensation von Windeinflüssen ist. Je größer die Windgeschwindigkeit ist, desto größer ist in der Regel die Auslenkung der Nutzpflanzen. Da mit einem quer zu den Pflanzreihen bewegbaren Werkzeugrahmen insbesondere der Windeinfluss quer zu den Pflanzreihen kompensiert werden kann, ist es besonders vorteilhaft, wenn das Windsignal die Windgeschwindigkeit des quer zu den Pflanzreihen wirkenden Winds umfasst. Alternativ oder zusätzlich kann das Windsignal auch die Windgeschwindigkeit des längs oder auch schräg zu den Pflanzreihen wirkenden Anteils des Winds umfassen. Hierdurch kann die Kompensation von Windeinflüssen weiter verbessert werden.

In diesem Zusammenhang wird vorgeschlagen, dass die Windüberwachung einen Windsensor zum Messen und/oder eine Schnittstelle zum Erfassen des auf die Nutzpflanzen einwirkenden Winds, insbesondere des quer zu den Pflanzreihen wirkenden Anteils des Winds, aufweist. Über einen Windsensor kann der auf die Nutzpflanzen einwirkende Wind besonders zuverlässig und örtlich aufgelöst für den jeweiligen Einsatzort des landwirtschaftlichen Geräts erfasst werden. Über eine Schnittstelle können auf einfache Art und Weise externe Informationen bezüglich des auf die Nutzpflanzen wirkenden Winds an die Windüberwachung übermittelt werden. Bei einer solchen Ausgestaltung kann auf einen Windsensor verzichtet werden, wodurch die Konstruktion vereinfacht wird.

Es hat sich in diesem Zusammenhang als vorteilhaft erwiesen, wenn der Windsensor zum Messen und/oder die Schnittstelle zum Erfassen der Windgeschwindigkeit und/oder der Windrichtung des auf die Nutzpflanzen einwirkenden Winds, insbesondere des quer zu den Pflanzreihen wirkenden Anteils des Winds, ausgebildet sind. Die Windgeschwindigkeit und/oder die Windrichtung sind wichtige Einflussgrößen auf die Auslenkung der Nutzpflanzen. Über die Messung und/oder Erfassung der Windgeschwindigkeit und/oder der Windrichtung des auf die Nutzpflanzen wirkenden Winds mit dem Windsensor kann die Kompensation von Windeinflüssen verbessert werden.

Im Hinblick auf eine effiziente Windkompensation hat es sich als vorteilhaft herausgestellt, wenn die von dem Windsensor gemessene und/oder die von der Schnittstelle erfasste Windgeschwindigkeit und/oder Windrichtung über ein Zeitintervall gemittelte Werte sind. Hierdurch kann der Kompensationsaufwand reduziert werden. Es ergibt sich zudem ein ruhigerer, verschleißärmerer Lauf des landwirtschaftlichen Geräts. Es hat sich als vorteilhaft erwiesen, wenn das Zeitintervall einstellbar ist, um das zeitliche Kompensationsverhalten an die vorherrschenden Windbedingungen anzupassen. Ferner kann es von Vorteil für einen ruhigen Lauf des landwirtschaftlichen Geräts sein, wenn schlagartige Veränderungen des Winds, wie etwa Windböen oder kurzzeitige Änderungen der Windrichtung, gefiltert werden und nicht zur Windkompensation herangezogen werden.

Darüber hinaus hat es sich als vorteilhaft herausgestellt, wenn die Schnittstelle zur Kommunikation mit einer oder mehreren externen Datenquellen, insbesondere Wetter-Datenquellen, ausgebildet ist. Durch eine solche Ausgestaltung können externe Informationen, welche zur Kompensation von Windeinflüssen genutzt werden können, auf einfache und zuverlässige Art und Weise an die Windüberwachung übermittelt werden. Die Schnittstelle kann hierbei zur kabelgebundenen und insbesondere auch zur kabellosen Kommunikation, beispielsweise über Mobilfunk- oder andere Kommunikationssysteme, ausgebildet sein.

In diesem Zusammenhang ist es ferner vorteilhaft, wenn die Schnittstelle mit einer Bedien- und/oder Eingabeeinheit zur manuellen Eingabe von für die Windkompensation nutzbaren Informationen verbunden ist. Über eine solche Bedien- und/oder Eingabeeinheit lassen sich zur Windkompensation verwendbare externe Informationen manuell durch das Bedienpersonal vorgeben. Bei einer solchen Ausgestaltung können insbesondere zu Beginn der Pflanzenbehandlung die zur Windkompensation notwendigen Informationen manuell eingeben werden. Ferner können während der Pflanzenbehandlung manuelle Korrektureingaben vorgenommen werden, insbesondere wenn sich während der Pflanzenbehandlung die Windbedingungen signifikant ändern, beispielsweise durch starke Änderungen der Windgeschwindigkeit und/oder der Windrichtung.

Im Hinblick auf die Ausgestaltung der externen Datenquellen wird vorgeschlagen, dass diese als Wetterstationen oder Wetterdatenbanken ausgestaltet sind. Die als Wetterstationen ausgebildeten Datenquellen können in einer vorteilhaften Ausgestaltung in der Nähe der Nutzfläche aufgestellt sein. Über in der Nähe der Nutzfläche aufgestellte Wetterstationen können Informationen über die Windgeschwindigkeit und/oder die Windrichtung des auf die Nutzpflanzen der jeweiligen Nutzfläche wirkenden Winds besonders genau und örtlich aufgelöst erfasst werden. Über als Wetterdatenbanken ausgebildete Datenquellen können die benötigen Daten, wie etwa die Windinformationen, oftmals vergleichsweise kostengünstig bereitgestellt werden. Bei einer solchen Ausgestaltung kann auf Wetterstationen verzichtet werden. Besonders vorteilhaft, etwa im Hinblick auf eine verbesserte Ausfallsicherheit der Windkompensation kann eine Ausgestaltung sein, bei welcher sowohl auf Wetterstationen als auch auf Wetterdatenbanken zurückgegriffen werden kann. Darüber hinaus können auch andere externe Datenquellen zum Einsatz kommen, hierzu kann beispielsweise auch das Erfahrungswissen des Bedienpersonals, etwa das Wissen über lokale Windbedingungen, zählen.

Es wird vorgeschlagen, dass der Werkzeugrahmen über die Positionseinstellung quer zu den Pflanzreihen um einen Stellweg gegenüber einem Rahmenträger einstellbar ist. Eine solche Ausgestaltung ermöglicht auf konstruktiv einfache Art und Weise eine zuverlässige Positionseinstellung quer zu den Pflanzreihen.

In diesem Zusammenhang wird ferner vorgeschlagen, dass die Positionseinstellung zur Bestimmung des Stellwegs aus dem Positionssignal und dem Windsignal ausgebildet ist. Insbesondere kann der Stellweg durch eine Verrechnung, insbesondere eine additive bzw. subtraktive Verrechnung des Positionssignals und des Windsignals bestimmt werden. Hierdurch kann der Windeinfluss auf besonders vorteilhafte sowie einfache Art und Weise berücksichtigt werden. Besonders vorteilhaft ist es, wenn die Positionseinstellung zur Bestimmung eines Offsets zur Windkorrektur aus dem Positionssignal und dem Windsignal ausgebildet ist.

Es hat sich ferner als vorteilhaft erwiesen, wenn die Positionseinstellung zur Bestimmung des Stellwegs aus einem Ausrichtungssignal des landwirtschaftlichen Geräts und/oder einer Zugmaschine ausgebildet ist. Durch die Berücksichtigung des Ausrichtungssignals kann die Qualität der Windkompensation weiter verbessert werden. Insbesondere können hierzu Informationen von Neigungssensoren zur Bestimmung einer etwa hanglagenbedingten Neigung des landwirtschaftlichen Geräts und/oder der Zugmaschine oder auch andere Ausrichtungsinformationen wie Navigations-Daten, beispielsweise GPS-Daten, verwendet werden.

Des Weiteren wird eine Stellwegbegrenzung zur Begrenzung eines maximalen Stellwegs vorgeschlagen, über welche eine zuverlässige Begrenzung des maximalen Stellwegs erreicht werden kann. Über eine Stellwegbegrenzung können Beschädigungen von Bauteilen oder Komponenten des landwirtschaftlichen Geräts vermieden werden. Außerdem kann mit einer Stellwegbegrenzung dafür gesorgt werden, dass Beschädigungen der Nutzpflanzen reduziert oder vollständig vermieden werden. Besonders vorteilhaft ist es, wenn die Stellwegbegrenzung einstellbar ist. Hierdurch kann etwa der maximale Stellweg auf die jeweiligen Umgebungsbedingungen, wie beispielsweise den Reihenabstand der Pflanzreihen, angepasst werden.

In diesem Zusammenhang wird ferner eine mit der Stellwegbegrenzung zusammenwirkende Stellwegalarmierung vorgeschlagen. Über eine solche Stellwegalarmierung kann das Bedienpersonal und/oder eine automatische Steuerung des landwirtschaftlichen Geräts über das Erreichen der Stellwegbegrenzung informiert werden. In der Folge können ggf. zusätzliche oder alternative Maßnahmen zur Windkompensation eingeleitet werden oder die Behandlung der Nutzpflanzen kann unterbrochen werden. Die Stellwegalarmierung kann beispielsweise als akustischer oder optischer Alarm ausgebildet sein.

In einer vorteilhaften Ausgestaltung weist die Positionseinstellung ein Stellelement zur Einstellung, insbesondere zur stufenlosen Einstellung der Position des Werkzeugrahmens auf. Eine solche Ausgestaltung erlaubt eine einfache, bedienerfreundliche Einstellung der Position des Werkzeugrahmens. Über ein stufenlos arbeitendes Stellelement kann eine besonders genaue und feinfühlige Einstellung verschiedener Positionen des Werkzeugrahmens erreicht werden.

In diesem Zusammenhang hat es sich als vorteilhaft erwiesen, wenn das Stellelement über den maximalen Stellweg zur Einstellung der Position des Werkzeugrahmens dient. Auf diese Weise kann über den gesamten Stellweg eine einfache, bedienerfreundliche und exakte Einstellung der Position des Werkzeugrahmens erfolgen.

Aus konstruktiver Sicht hat es sich als vorteilhaft erwiesen, wenn das Stellelement als hydraulisches, pneumatisches oder elektrisches Stellelement ausgebildet ist, welches zwischen dem Rahmenträger und dem Werkzeugrahmen oder zwischen dem Rahmenträger und einem lenkbaren Fahrwerk des Fahrzeugrahmens oder zwischen dem Werkzeugrahmen und einer Werkzeugaufnahme der Behandlungswerkzeuge angeordnet ist. Über mit unterschiedlichen Wirkprinzipien arbeitende Stellelemente sowie unterschiedliche Positionierungen der Stellelemente kann das landwirtschaftliche Gerät auf einfache Art und Weise an die jeweiligen Umweltbedingungen angepasst werden. Solche Umweltbedingungen können sich etwa aus Eigenschaften der Nutzfläche oder den regelmäßig vorherrschenden Windverhältnissen ergeben. Alternativ oder zusätzlich sind auch weitere Arten von Stellelementen oder andere Anordnungsmöglichkeiten der Stellelemente denkbar, sofern sich diese als vorteilhaft im Hinblick auf eine effektive Windkompensation erweisen sollten.

Im Hinblick auf eine weiter vereinfache Positionseinstellung wird vorgeschlagen, dass die Positionseinstellung eine Steuerung zur automatischen Einstellung des Werkzeugrahmens oder der Werkzeugaufnahme aufweist. Eine solche Ausgestaltung kann sich als besonders bedienerfreundlich erweisen, da hierdurch eine aufwendige manuelle Einstellung des Werkzeugrahmens oder der Werkzeugaufnahme durch das Bedienpersonal entfallen kann.

Des Weiteren hat es sich als vorteilhaft herausgestellt, wenn der Pflanzreihensensor zur berührungslosen, insbesondere zur optischen, Erfassung der Pflanzreihen ausgebildet ist. Eine solche Ausgestaltung des Pflanzreihensensors erlaubt eine zuverlässige Erfassung der Pflanzreihen, ohne dass die Gefahr einer Beschädigung der Pflanzen durch den Pflanzreihensensor selbst besteht. Alternativ kann der Pflanzreihensensor jedoch auch zur berührenden, taktilen Erfassung der Pflanzreihen ausgebildet sein, wenn sich dies im jeweiligen Anwendungsfall als vorteilhaft herausstellen sollte.

Im Hinblick auf eine besonders einfache Versorgung des Pflanzreihensensors mit elektrischer Energie hat es sich als vorteilhaft erwiesen, wenn der Pflanzreihensensor mit einer Bordelektronik einer landwirtschaftlichen Zugmaschine verbindbar ist. Alternativ kann der Pflanzreihensensor auch über eigene separate Elektronik mit elektrischer Energie versorgt werden.

In einer Weiterbildung der Erfindung wird vorgeschlagen, dass der Pflanzreihensensor zur Erfassung der Art und/oder der Anzahl und/oder der Abmessungen der in den Pflanzreihen angebauten Nutzpflanzen ausgebildet ist. Über die Erfassung solcher Zusatzinformationen über die in den Pflanzreihen angebauten Nutzpflanzen kann die Qualität der Windkompensation weiter verbessert werden. Alternativ oder zusätzlich können weitere Eigenschaften oder Merkmale der Nutzpflanzen über den Pflanzreihensensor erfassbar sein, welche sich auf die Auslenkung der Nutzpflanzen unter Windeinfluss auswirken können.

Es wird ferner vorgeschlagen, dass die von dem Pflanzreihensensor erfassten Sensordaten zur Erzeugung des Positionssignals mit Datenbankinformationen betreffend die Abmessungen, die Art und das Entwicklungsstadium der Nutzpflanzen verknüpfbar sind. Über eine derartige Ausgestaltung kann die Windkompensation weiter verbessert werden. Insbesondere kann eine gute Anpassung der Windkompensation auf Eigenschaften der jeweiligen Nutzpflanze erfolgen.

In diesem Zusammenhang wird vorgeschlagen, dass die Datenbankinformationen manuell oder automatisiert auf Basis von künstlicher Intelligenz mit dem Positionssignal verknüpfbar sind. Eine manuelle Verknüpfbarkeit kann eine große Flexibilität mit hohem Anpassungsspielraum ermöglichen. Eine Verknüpfung auf Basis von künstlicher Intelligenz kann sich als besonders bedienerfreundlich, schnell und fehlerunanfällig erweisen.

Es wird ferner vorgeschlagen, dass das Positionssignal in Abhängigkeit der erfassten Abmessungen, der Art und/oder des Entwicklungsstadiums der Nutzpflanzen erzeugbar ist. Hierdurch kann eine Windkompensation in Abhängigkeit der erfassten Abmessungen, der Art und/oder des Entwicklungsstadiums der Nutzpflanzen erfolgen. Insbesondere kann ein Offset zur Windkorrektur nutzpflanzenabhängig ermittelt werden.

In einer weiteren vorteilhaften Ausgestaltung weist das landwirtschaftliche Gerät mehrere Pflanzreihensensoren zur Erfassung von Pflanzreihen auf, welche Nutzpflanzen mit unterschiedlichen Abmessungen aufweisen. Derartige unterschiedliche Abmessungen der Nutzpflanzen können sich etwa aus unterschiedlichen Entwicklungsstadien oder verschiedenen Sorten der Nutzpflanzen ergeben. So können beispielsweise zur Erfassung von Nutzpflanzen in einem frühen Entwicklungsstadium zeitnah nach der Aussaat bzw. dem Anpflanzen Pflanzreihensensoren zum Einsatz kommen, welche vergleichsweise nah über der Oberfläche der Nutzfläche angeordnet sind. Zur Erfassung von weiter entwickelten Nutzpflanzen, welche eine gewisse Wuchshöhe erreicht haben, können andere Pflanzreihensensoren zum Einsatz kommen, deren Position gegenüber der Nutzfläche erhöht ist. Alternativ können die Pflanzreihensensoren auch einstellbar, insbesondere schwenkbar, an dem landwirtschaftlichen Gerät angeordnet sein, so dass ein und dieselben Pflanzreihensensoren zur Erfassung von Nutzpflanzen mit unterschiedlichen Abmessungen ausgebildet sein können.

In einer vorteilhaften Weiterbildung der Erfindung wird vorgeschlagen, dass die an dem Werkzeugrahmen angeordneten Behandlungswerkzeuge als Bodenbearbeitungswerkzeuge ausgebildet sind. Eine derartige Ausgestaltung erlaubt eine Bodenbearbeitung der Nutzfläche mit dem landwirtschaftlichen Gerät.

In diesem Zusammenhang wird vorgeschlagen, dass die Positionseinstellung derart ausgebildet und eingerichtet ist, dass die an dem Werkzeugrahmen angeordneten Bodenbearbeitungswerkzeuge zur Bearbeitung des Bodens im Wesentlichen mittig zwischen den Pflanzreihen oder zentral auf die Pflanzreihen positionierbar sind. Über eine Positionierung der Bodenbearbeitungswerkzeuge mittig zwischen den Pflanzreihen kann eine effektive und gründliche Bodenbearbeitung zwischen den Pflanzreihen erfolgen. Hierdurch können etwa Unkräuter, welche zwischen den Pflanzreihen wachsen, zuverlässig entfernt werden. Eine Positionierung zentral auf die jeweiligen Pflanzreihen kann sich im Hinblick auf eine Bodenbearbeitung zwischen den einzelnen Nutzpflanzen, welche in ein und derselben Pflanzreihe wachsen, als vorteilhaft herausstellen.

In diesem Zusammenhang hat es sich zudem als vorteilhaft herausgestellt, wenn die Bodenbearbeitungswerkzeuge als Hackwerkzeuge ausgebildet sind. Über solche Hackwerkzeuge kann eine das Pflanzenwachstum unterstützende Behandlung der Nutzfläche, beispielsweise zur Unkrautentfernung, erfolgen.

Es wird ferner vorgeschlagen, dass die Behandlungswerkzeuge als Sprühwerkzeuge zur Ausbringung von Sprühmitteln, insbesondere zur bandartigen Ausbringung von Sprühmitteln, ausgebildet sind. Über die als Sprühwerkzeuge ausgebildeten Behandlungswerkzeuge kann etwa ein Pflanzenschutzmittel bandartig auf die Pflanzreihen ausgebracht werden. Besonders vorteilhaft ist es, wenn die Sprühwerkzeuge zentral auf die Pflanzreihen positionierbar sind, damit das Sprühmittel möglichst vollständig auf die Nutzpflanzen, insbesondere deren Blattwerk, aufgebracht werden kann. In einer vorteilhaften Ausgestaltung weist das landwirtschaftliche Gerät sowohl Bodenbearbeitungswerkzeuge als auch Sprühwerkzeuge auf.

In diesem Zusammenhang hat es sich als vorteilhaft herausgestellt, wenn die Positionseinstellung derart ausgebildet und eingerichtet ist, dass die an dem Werkzeugrahmen angeordneten Sprühwerkzeuge zur Ausbringung von Sprühmitteln auf die Nutzpflanzen im Wesentlichen zentral oberhalb der Pflanzreihen positionierbar sind. Hierdurch kann eine zielgerichtete, dosierte Ausbringung von Sprühmitteln auf die Nutzpflanzen, insbesondere auf deren Blattwerk, sichergestellt werden.

Zur Lös u n g der vorstehend genannten Aufgabe wird ferner ein Verfahren zur Behandlung von in Pflanzreihen angebauten Nutzpflanzen mit einem landwirtschaftlichen Gerät vorgeschlagen, welches eine mehrere Behandlungswerkzeuge aufweisenden Werkzeugrahmen aufweist, dessen Position gegenüber den Pflanzreihen über einen ein Positionssignal bereitstellenden Pflanzreihensensor erfasst wird und über eine Positionseinstellung eingestellt wird, wobei eine mit der Positionseinstellung verbundene Windüberwachung ein Windsignal bereitstellt, dass zur Kompensation von Windeinflüssen mit dem Positionssignal verknüpft wird. Es ergeben sich die im Zusammenhang mit dem landwirtschaftlichen Gerät erläuterten Vorteile.

Weitere Einzelheiten und Vorteile der Erfindung werden nachfolgend unter Zuhilfenahme der beigefügten Zeichnungen gemäß Fig. 1a bis 3b erläutert. Darin zeigen:
- Fig. 1A und 1B: Draufsichten auf eine Zugmaschine und ein an diese angebrachtes landwirtschaftliches Gerät mit einem einstellbaren Werkzeugrahmen in verschiedenen Einstellpositionen;
- Fig. 2 und 3: Alternative Ausgestaltungen landwirtschaftlicher Geräte gemäß der Ansicht in Fig. 1A;
- Fig. 4A und 4B: Rückansichten einer landwirtschaftlichen Zugmaschine mit einem an diesem angebrachten landwirtschaftlichen Gerät zur Veranschaulichung des Windeinflusses.

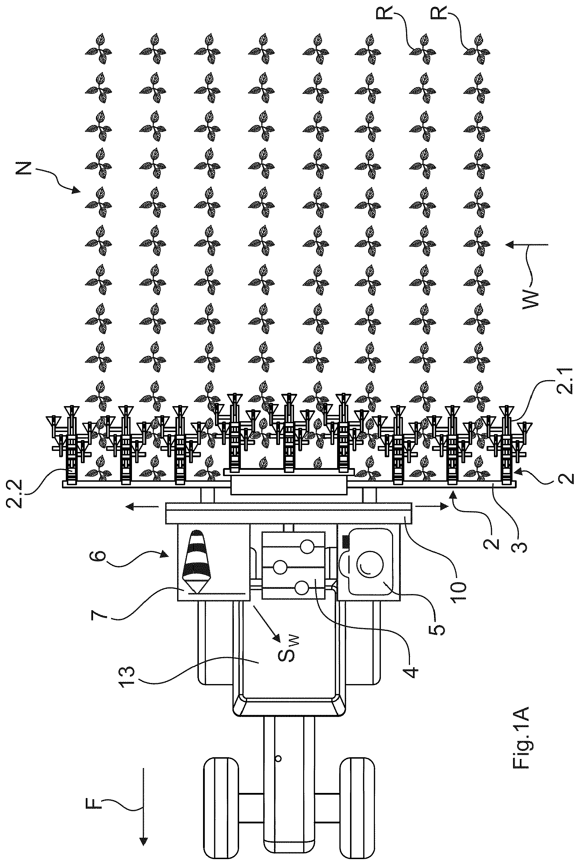

Die Darstellung in Fig. 1A zeigt eine Draufsicht auf ein landwirtschaftliches Gerät 1 zur Behandlung von Nutzpflanzen N, welche auf einer Nutzfläche, beispielsweise einem landwirtschaftlichen Acker oder Feld, angebaut sind. Die Nutzpflanzen N sind in sich mit einem gewissen Abstand zueinander im Wesentlichen parallel zueinander, in der Darstellung gemäß Fig. 1A von links nach rechts erstreckenden Pflanzreihen R kultiviert. Bei den Nutzpflanzen N kann es sich etwa um Getreide- oder Gemüsepflanzen handeln.

Das landwirtschaftliche Gerät 1 ist im Heckanbau an der Rückseite einer landwirtschaftlichen Zugmaschine 13 angebracht und wird von dieser zur Behandlung der Nutzpflanzen N mit einer gewissen Fahrgeschwindigkeit in Fahrtrichtung F entlang der Pflanzreihen R über die Nutzfläche bewegt. Alternativ oder zusätzlich kann das landwirtschaftliche Gerät 1 auch im Frontanbau an der Vorderseite der Zugmaschine 13 angebracht sein. Ferner kann das landwirtschaftliche Gerät 1 auch an die Zugmaschine 13 angehängt oder selbstfahrend ausgebildet sein.

Zur Behandlung der Nutzpflanzen N weist das landwirtschaftliche Gerät 1 mehrere Behandlungswerkzeuge 2 auf, welche an einem gemeinsamen Werkzeugrahmen 3 angeordnet sind. Die Behandlungswerkzeuge 2 gemäß Fig. 1A sind als Bodenbearbeitungswerkzeuge 2.1 ausgebildet und dienen der Bearbeitung des Bodens der Nutzfläche, insbesondere des zwischen den Pflanzreihen R befindlichen Bodens. Alternativ kann es sich auch um Bodenbearbeitungswerkzeuge 2.1 zur Bearbeitung des Bodens zwischen den Nutzpflanzen N ein und derselben Pflanzreihe R handeln.

Bei den Bodenbearbeitungswerkzeugen 2.1 kann es sich beispielsweise um in den Boden der Nutzfläche eingreifende Hackwerkzeuge handeln, über welche zwischen den Pflanzreihen R wachsende Unkräuter mechanisch entfernt werden können. Um Unkräuter möglichst gründlich entfernen zu können, ist es bei solchen Hackwerkzeugen wünschenswert, diese möglichst nah entlang der jeweiligen Pflanzreihe R, insbesondere möglichst nah entlang der jeweiligen Austrittsstellen der Nutzpflanze N aus der Nutzfläche vorbeizubewegen. Die Bodenbearbeitungswerkzeuge 2.1 können ferner auch zur Lockerung oder Glättung des Bodens ausgebildet sein.

Die Behandlungswerkzeuge 2 sind derart an dem Werkzeugrahmen 3 angeordnet, dass mehrere Pflanzreihen R gleichzeitig bearbeitet werden können. Gemäß der Darstellung in Fig. 1A sind neun Behandlungswerkzeuge 2 zur gleichzeitigen Behandlung von acht Pflanzreihen R über jeweils eine Werkzeugaufnahme 2.2 an dem Werkzeugrahmen 3 angeordnet.

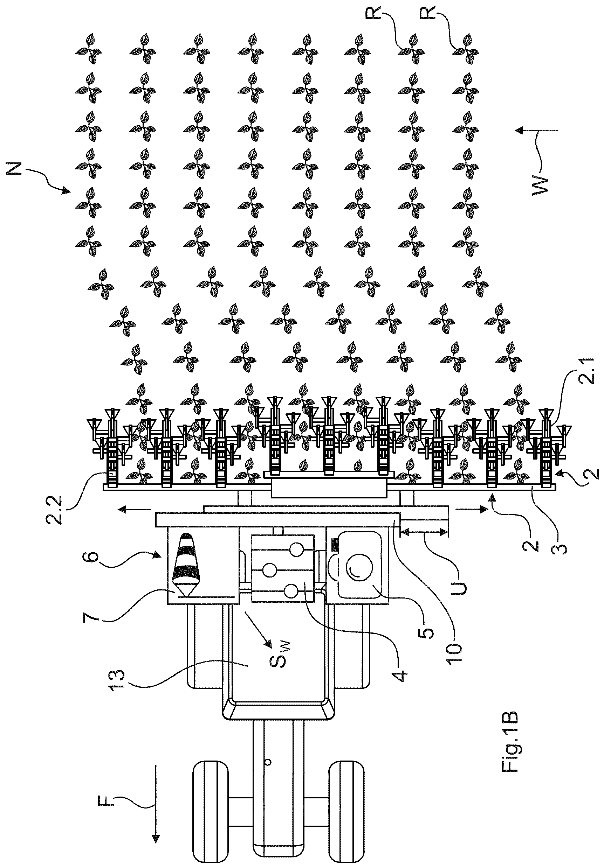

Die realen Verläufe der Pflanzreihen R auf der Nutzfläche unterliegen Schwankungen, welche beispielsweise aus der Topographie der Nutzfläche oder aus während der Aussaat oder dem Anpflanzen der Nutzpflanzen N eingebrachten Abweichungen von einem ideal geraden Verlauf resultieren, vgl. auch Fig. 1B. Um die Behandlungswerkzeuge 2 während der Behandlung der Nutzpflanzen N unabhängig von der Positionierung des Geräts 1 bzw. der Zugmaschine 13 auf die tatsächlichen Verläufe der Pflanzreihen R anpassen zu können, ist der Werkzeugrahmen 3 quer zu den Pflanzreihen R bewegbar ausgebildet. Gemäß der Darstellung in Fig. 1B befindet sich der Werkzeugrahmen 3 in Fahrtrichtung F gesehen im Vergleich mit der Darstellung in Fig. 1A in einer um einen Stellweg U nach links versetzten Position - entsprechend dem tatsächlichen, gekrümmten Verlauf der Pflanzreihen R.

Zur Einstellung der Position des Werkzeugrahmens 3 gegenüber den Pflanzreihen R ist eine automatische Positionseinstellung 4 vorgesehen. Als Eingangsgröße für die Positionseinstellung 4 wird ein Positionssignal S_{P} verwendet, welches der tatsächlichen Position einer oder mehrerer Pflanzreihen R entspricht. Das Positionssignal S_{P} wird von einem an dem Gerät 1 angeordneten Pflanzreihensensor 5 bereitgestellt, welcher die tatsächliche Position einer oder mehrerer Pflanzreihen R erfasst.

Die Erfassung der Pflanzreihen R erfolgt mit einem optischen Pflanzreihensensor 5, welcher die Oberseiten der Nutzpflanzen N detektiert und deren Positionen als Positionssignal S_{P} für die Positionseinstellung 4 bereitstellt. Der Werkzeugrahmen 2 wird der erfassten Position der Nutzpflanzen N bzw. der Pflanzreihen R nachgeführt.

Insbesondere vergleichsweise hoch gewachsenen Nutzpflanzen N, welche zudem über eine geringe Biegesteifigkeit verfügen, werden unter Windeinflüssen jedoch oftmals stark ausgelenkt. Die windbedingte Auslenkung der Oberseiten der Nutzpflanzen N kann Fehlpositionierungen des Werkzeugrahmens 3 bei der Nachführung zur Folge haben, da die über den Pflanzreihensensor 5 detektierte Pflanzenoberseite aufgrund der Auslenkung von der Position der Austrittsstelle der Nutzpflanze N aus der Nutzfläche abweicht. Diese Fehlpositionierungen können im Extremfall zu ungewollten Beschädigungen der Nutzpflanzen N durch die Behandlungswerkzeuge 2 führen.

Zur Sicherstellung eines zuverlässigen Betriebs des landwirtschaftlichen Geräts 1 auch unter Windeinflüssen ist die Positionseinstellung 4 mit einer Windüberwachung 6 verbunden, welche ein Windsignal Sw bereitstellt, das zur Kompensation von Windeinflüssen mit dem Positionssignal S_{P} verknüpfbar ist. Hierdurch lassen sich windbedingte Fehlpositionierungen der Behandlungswerkzeuge 2 vermindern.

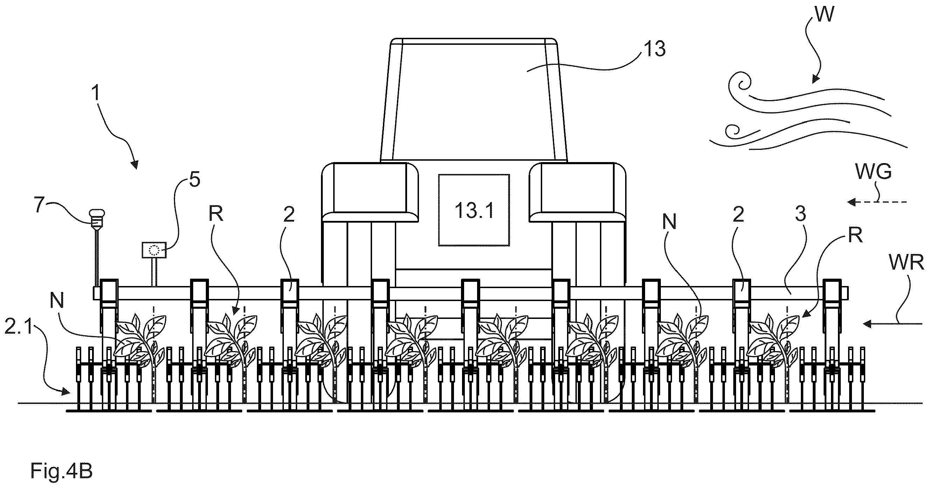

Nachfolgend werden der Aufbau und die Funktionsweise der Windüberwachung 6 anhand der Darstellungen in Fig. 1A und B erläutert. Die Windüberwachung 6 weist einen Windsensor 7 zum Messen des auf die in den Pflanzreihen R angebauten Nutzpflanzen N einwirkenden Winds W auf. Der Windsensor 7 ist an einem Rahmenträger 10 oder dem Werkzeugrahmen 3 angeordnet (vgl. Fig. 4B). Alternativ oder zusätzlich kann der Windsensor 7 jedoch auch an einer anderen geeigneten Stelle des Geräts 1 oder auch an der Zugmaschine 13 angeordnet sein. Bevorzugterweise ist der Windsensor 7 an einer Stelle angeordnet, an welcher der Wind W möglichst ungestört durch Anbauteile oder sonstige Windhindernisse gemessen werden kann. Es können auch mehrere Windsensoren 7 vorgesehen sein, welche etwa unterschiedliche Windparameter erfassen oder auch unterschiedliche Windrichtungen WR oder Bereiche der Windgeschwindigkeit WG abdecken können.

Der Windsensor 7 ist insbesondere zur Erfassung des quer zu den Pflanzreihen R wirkenden Anteils des Winds W ausgebildet, kann jedoch auch zur Erfassung anderer Windanteile, insbesondere der längs oder schräg zu den Pflanzreihen R wirkenden Anteile des Winds W, ausgebildet sein. Der Windsensor 7 ist zur Erfassung der Windgeschwindigkeit WG und der Windrichtung WR des auf die Nutzpflanzen N wirkenden Winds ausgebildet, vgl. Fig. 4B. Alternativ können separate Windsensoren 7 zur Erfassung der Windrichtung WR und der Windgeschwindigkeit WG vorgesehen sein.

Die den Windsensor 7 aufweisende Windüberwachung 6 stellt ein Windsignal Sw bereit, welches die von dem Windsensor 7 erfasste Windgeschwindigkeit WG des auf die Pflanzreihen R wirkenden Winds W umfasst. Neben der Windgeschwindigkeit WG kann das Windsignal Sw auch die Windrichtung WR sowie weitere Parameter des Winds W umfassen. Hierzu zählen auch Parameter, welche nicht unmittelbar sondern nur indirekt oder mittelbar auf den Wind W schließen lassen, wie beispielsweise Luftdruckinformationen oder auch Lufttemperaturinformationen.

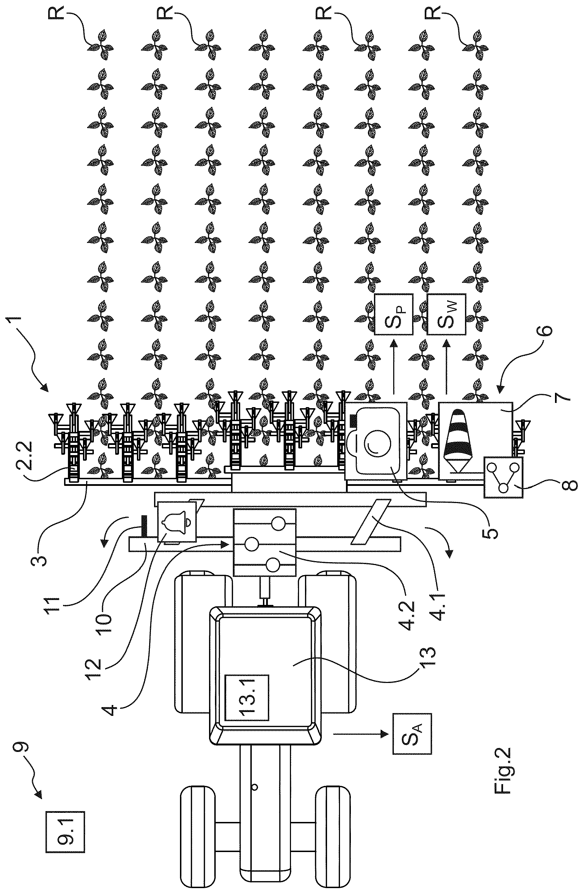

Alternativ oder zusätzlich zu dem Windsensor 7 kann die Windüberwachung 6 eine oder mehrere Schnittstellen 8 zum Erfassen des auf die Nutzpflanzen N einwirkenden Winds W aufweisen, vgl. Fig. 2. Die Schnittstelle 8 dient der Kommunikation mit einer oder mehreren externen Datenquellen 9. Über die Schnittstelle 8 können aus den externen Datenquellen 9 stammende Informationen und Daten, insbesondere über die Windgeschwindigkeit WG und die Windrichtung WR des auf die Nutzpflanzen N einwirkenden Winds W, übertragen werden. Ferner können über eine in den Figuren nicht dargestellte, mit der Schnittstelle 8 verbundene Bedieneinheit vor oder während der Pflanzenbehandlung Informationen und Daten manuell durch das Bedienpersonal eingeben werden. Bei diesen Informationen und Daten kann es sich etwa um Erfahrungswissen des Bedienpersonals oder aus externen Datenquellen 9 stammende Daten handeln.

Bei den externen Datenquellen 9 kann es sich insbesondere um Wetter-Datenquellen handeln, beispielsweise internetbasierte Wetterdatenbanken oder Wetter-Apps. Alternativ oder zusätzlich können auch Wetterstationen 9.1 als solche Datenquellen 9 dienen. Gemäß der schematischen Darstellung in Fig. 2 kann es sich hierbei beispielsweise um eine lokale Wetterstation 9.1 handeln, welche etwa am Rand der Nutzfläche oder an einem anderen Ort, beispielsweise in der Nähe der Nutzfläche oder zentral zwischen mehreren Nutzflächen, aufgestellt ist.

Die von dem Windsensor 7 oder der Schnittstelle 8 erfassten Werte der Windgeschwindigkeit WG und der Windrichtung WR werden über ein Zeitintervall gemittelt. Auf diese Weise können kurzzeitige Schwankungen von Windparametern, beispielsweise in Folge von Windböen oder schnell wechselnden Windrichtungen WR, gemittelt oder geglättet werden. Die Dauer des Zeitintervalls, über welches die Windparameter gemittelt werden, kann eingestellt werden oder fix vorgegeben sein.

Das von der Windüberwachung 6 bereitgestellte Windsignal Sw, wird zur Kompensation der auf die Nutzpflanzen N einwirkenden Windeinflüsse mit einem Positionssignal S_{P} verrechnet, welches die Position des Werkzeugrahmens 3 relativ zu den Pflanzreihen R repräsentiert. Die Position des Werkzeugrahmens 3 relativ zu den Pflanzreihen R ist über ein Reihenführungssystem einstellbar, welches das Positionssignal S_{P} als Eingangssignal verwendet.

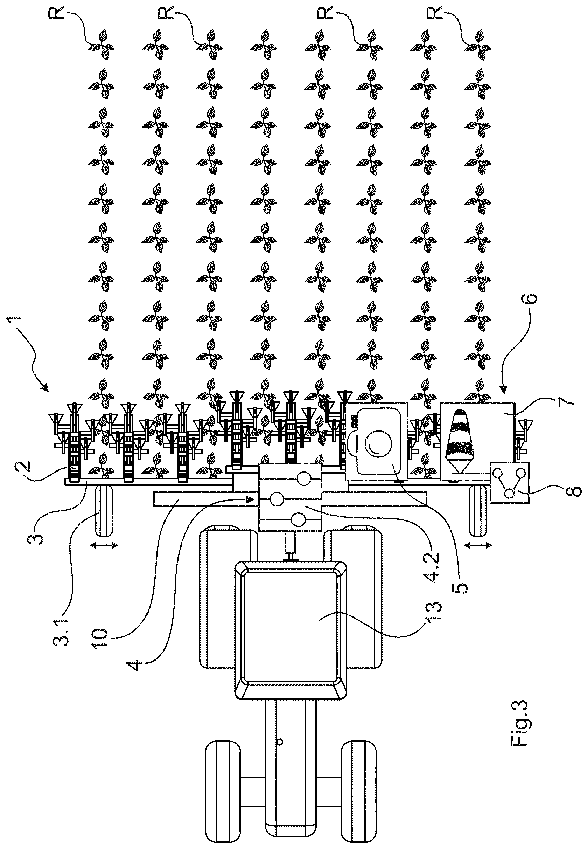

Im Folgenden wird erläutert, auf welche Weise das Positionssignal S_{P} von dem Pflanzreihensensor 5 bereitgestellt wird. Bei dem Pflanzreihensensor 5 handelt es sich um eine Erfassungsvorrichtung zur Erfassung bzw. Detektion der Positionen der Pflanzreihen R. Wie dies etwa den schematischen Darstellungen in Fig. 2 und 3 entnommen werden kann, ist der Pflanzreihensensor 5 als berührungslos arbeitender, optischer Sensor ausgebildet. Es kann sich hierbei beispielsweise um eine Kamera, einen Radarsensor, einen Ultraschallsensor oder einen anderen berührungslosen Sensor zur Erfassung der Pflanzreihen R handeln. Ein berührungslos arbeitender Pflanzreihensensor 5 bringt im Unterschied zu taktilen Pflanzreihensensoren 5 den Vorteil mit sich, dass die Gefahr einer Beschädigung der Nutzpflanzen N durch eine Berührung mit dem Pflanzreihensensor 5 praktisch ausgeschlossen ist. In gewissen Anwendungsfällen, etwa bei vergleichsweise robusten Nutzpflanzen N, können auch taktile Pflanzreihensensoren 5 eingesetzt werden.

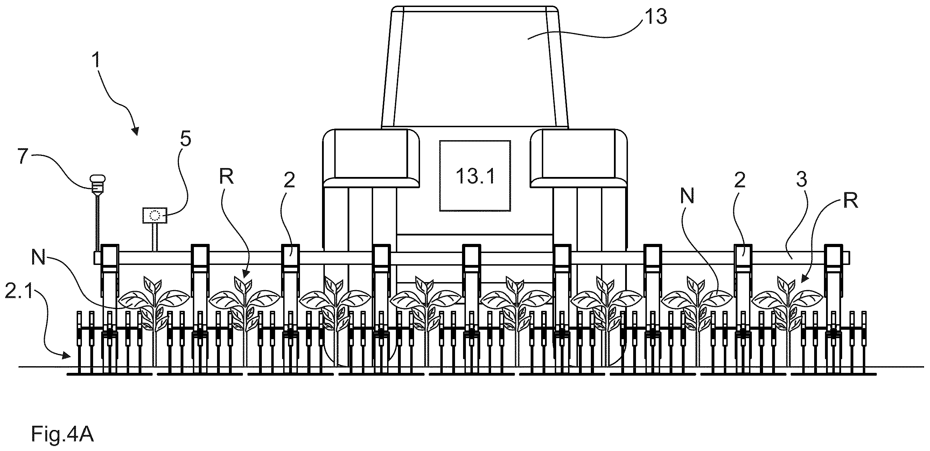

Der Pflanzreihensensor 5 ist gemäß der Darstellung in Fig. 4A und B an dem Werkzeugrahmen 3 angeordnet und entgegen der Fahrtrichtung F ausgerichtet. Alternativ kann der Pflanzreihensensor 5 jedoch auch an einem anderen Bauteil oder Element des landwirtschaftlichen Geräts 1 oder auch an der Zugmaschine 13 angeordnet sein. Der Pflanzreihensensor 5 ist gemäß Fig. 4A oberhalb der Nutzpflanzen N angeordnet und derart ausgerichtet, dass dieser mindestens eine auf der Nutzfläche angebaute Pflanzreihe R erfassen kann. Der Pflanzreihensensor 5 kann zur Anpassung dessen Sichtfelds in vertikaler und/oder horizontaler Richtung bewegbar, insbesondere schwenkbar, ausgestaltet sein. Hierdurch können Nutzpflanzen N unterschiedlicher Wuchshöhe oder Abmessungen mit demselben Pflanzreihensensor 5 erfasst werden. Alternativ können auch mehrere Pflanzreihensensoren 5 vorgesehen sein, welche beispielsweise zur Erfassung unterschiedlich hochgewachsener Nutzpflanzen N ausgebildet sein können.

Der Pflanzreihensensor 5 ist zur Versorgung mit elektrischem Strom mit der Bordelektrik bzw. Bordelektronik der Zugmaschine 13 verbunden. Bevorzugterweise ist der Pflanzreihensensor 5 in den elektrischen Kreis des landwirtschaftlichen Geräts 1 oder der Zugmaschine 13 eingebunden.

Die Erfassung der Pflanzreihen R bzw. der Position des Werkzeugrahmens 3 relativ zu den Pflanzreihen R kann kontinuierlich oder in gewissen zeitlichen Intervallen getaktet erfolgen. Die Erfassung kann auf der Detektion der Lage von Oberflächenpunkten der Nutzpflanzen N beruhen oder auch auf der Erfassung der Mittelpunkte der jeweiligen Nutzpflanzen N.

Neben Informationen betreffend die Lage bzw. die Position der in den Pflanzreihen R angebauten Nutzpflanzen N relativ zu dem Werkzeugrahmen 3 kann der Pflanzreihensensor 5 auch zur Erfassung der Art, der Anzahl, des Entwicklungsstadiums oder der Abmessungen der Nutzpflanzen N ausgebildet sein.

Basierend auf den Sensordaten des Pflanzreihensensors 5 können entspreche Zusatzinformationen mit dem jeweiligen Positionssignal S_{P} verknüpft werden. Die Zusatzinformationen können insbesondere als Datenbankinformationen ausgebildet sein, welche zum Beispiel Auskunft über die Abmessungen, die Art und das Entwicklungsstadium der Nutzpflanzen N geben. Die Datenbankinformationen können in internetbasierten Datenbanken oder in lokalen, beispielsweise auch manuell angelegten Datenbanken hinterlegt sein.

Zur Verknüpfung der Datenbankinformationen mit dem jeweiligen Positionssignal S_{P}, also dem Output des Pflanzreihensensors 5, kann insbesondere künstliche Intelligenz zum Einsatz kommen. Hierdurch kann eine automatisierte Verknüpfung des Positionssignal S_{P} mit der entsprechenden Datenbankinformation erfolgen. Die Verknüpfung auf Basis künstlicher Intelligenz kann beispielsweise aufgrund von über den Pflanzreihensensor 5 erfassten charakteristischen Merkmalen der Nutzpflanzen N, beispielsweise deren Blattform und -größe, erfolgen. Ferner kann die künstliche Intelligenz auch zur Unterscheidung zwischen den Nutzpflanzen N und Unkräutern ausgebildet sein, wodurch ungewollte Beschädigungen von Nutzpflanzen N noch zuverlässiger vermieden werden können.

Alternativ zu einer automatischen Verknüpfung kann auch eine manuelle Verknüpfung durch das Bedienpersonal vorgesehen sein, beispielsweise durch eine Festlegung der Art und des Entwicklungsstadiums der auf der jeweiligen Nutzfläche angebauten Nutzpflanzen N durch das Bedienpersonal. Das Positionssignal S_{P} kann im Ergebnis in Abhängigkeit der erfassten Abmessungen, der Art und/oder des Entwicklungsstadiums der jeweiligen Nutzpflanzen N erzeugt werden.

Das Positionssignal S_{P} wird gemeinsam mit dem Windsignal Sw bei der Einstellung des Werkzeugrahmens 2 mittels der Positionseinstellung 4 verwendet, was nachfolgend anhand der Darstellungen in Fig. 2 und 3 erläutert wird.

Aus dem von dem Pflanzreihensensor 5 bereitgestellten Positionssignal S_{P} und dem von der Windüberwachung 6 bereitgestellten Windsignal Sw erfolgt eine Bestimmung des Stellwegs U, welcher zur Kompensation des herrschenden Winds W erforderlich ist. Hierbei wird aus den entsprechenden Daten ein Offset ermittelt. Dieser Offset entspricht der Auslenkung der von dem Pflanzreihensensor 5 erfassten Stelle der jeweiligen Nutzpflanzen N unter dem Windeinfluss. Wenn der Wind W in Fahrtrichtung F von rechts weht, werden die Nutzpflanzen N entsprechend nach links ausgelenkt, vgl. auch Fig. 4B. Die von dem Pflanzreihensensor 5 erfassten Positionen sind zur Einstellung der korrekten, eine Beschädigung der Nutzpflanzen N vermeidenden Behandlungsposition, um einen gewissen Betrag, den so genannten Offset, zu korrigieren. Gemäß der Darstellung in Fig. 4B würde der Offset dazu führen, dass der Werkzeugrahmen 2 um einen entsprechenden Stellweg U entgegen der Windrichtung WR - gemäß der Darstellung in Fig. 4B nach rechts - bewegt wird. Bei dem Stellweg U handelt es sich um denjenigen Weg, den der Werkzeugrahmen 2 relativ zu einem Rahmenträger 10, welcher starr mit der Zugmaschine 13 verbunden ist, bewegt werden muss, um die aus dem Positionssignal S_{P} und dem Windsignal Sw bestimmte Offsetposition zu erreichen.

Neben dem Positionssignal S_{P} und dem Windsignal Sw können noch weitere Signale zur Bestimmung des Stellwegs U herangezogen werden. So kann beispielsweise ein Ausrichtungssignal S_{A} der Zugmaschine 13 oder des Geräts 1, etwa aus einem GPS-Sensor oder Gyro-Sensor, in die Bestimmung des Stellwegs U einbezogen werden, vgl. die schematische Darstellung in Fig. 2.

Das Ausrichtungssignal S_{A} kann auch von einem Neigungssensor zur Erfassung der Neigung der Nutzfläche stammen. Durch die Verknüpfung mit einem Ausrichtungssignal S_{A} lässt sich die Bestimmung des Stellwegs U, welcher zur Kompensation der Windeinflüsse erforderlich ist, weiter verbessern. Der Stellweg U lässt sich in diesem Fall aus der Gesamtheit von Positionssignal S_{P}, Windsignal Sw und Ausrichtungssignal S_{A} ermitteln.

Ferner kann, wie vorstehend bereits erläutert, vorgesehen sein, dass die Windkorrektur bzw. der Offset abhängig von Parametern der Nutzpflanze N ist, beispielsweise deren Abmessungen, Art und/oder Entwicklungsstadium. Bei hochgewachsenen Nutzpflanzen N mit dünnem Stängel, welche eher biegeweich sind und damit unter Windeinfluss stärker ausgelenkt werden, ist eine stärkere Windkompensation erforderlich als bei kleineren Nutzpflanzen N mit dickerem Stängel.

Im Folgenden wird anhand der Darstellungen in Fig. 1A bis 2B erläutert, wie die Einstellung des Stellwegs U über die Positionseinstellung 4 umgesetzt ist.

Die Darstellungen in Fig. 1A und 1B zeigen dabei eine Ausführung des Geräts 1, bei welcher der Stellweg U mittels eines Verschieberahmens einstellbar ist. Der Werkzeugrahmen 3, an welchem die Behandlungswerkzeuge 2 angebracht sind, ist quer zu den Pflanzreihen R linear beweglich an einem starren Rahmenträger 10 gelagert, vgl. Fig. 1A. Über ein in den Fig. 1A und 1B nicht dargestelltes Stellelement 4.1 ist der Werkzeugrahmen 3 relativ zu dem Rahmenträger 10 bewegbar. Im Unterschied zu der Darstellung in Fig. 1A zeigt die Darstellung in Fig. 1B einen um den Stellweg U in Fahrtrichtung F nach links bewegten Werkzeugrahmen 2. Über die den Stellweg U einstellenden Positionseinstellung 4 können die Behandlungswerkzeuge 2, insbesondere die als Bodenbearbeitungswerkzeuge 2.1 ausgebildeten Behandlungswerkzeuge 2, im Wesentlichen mittig zwischen die Pflanzreihen R oder zentral auf die Pflanzreihen R positioniert werden.

Zur automatischen Einstellung des Stellwegs U weist die Positionseinstellung 4 eine Steuerung 4.1 auf. Über diese Steuerung 4.1 kann eine automatische Einstellung des Werkzeugrahmens 3, d. h. des Stellwegs U, erfolgen. Alternativ kann die Einstellung des Stellwegs U auch manuell, etwa durch das Bedienpersonal, erfolgen.

In der Ausführung gemäß Fig. 2 ist der Werkzeugrahmen 3 über eine Parallelogrammaufhängung mit dem Rahmenträger 10 verbunden. Über das Stellelement 4.1 kann der Werkzeugrahmen 3 über die Paralellogrammaufhängung relativ zu dem Rahmenträger 10 bewegt werden, um den vorgegebenen Stellweg U einzustellen. Das Stellelement 4.1 ist als hydraulischer Stellzylinder zwischen dem Rahmenträger 10 und dem Werkzeugrahmen 3 ausgebildet und erlaubt eine stufenlose Einstellung des Stellwegs U. Die Einstellung erfolgt durch eine Schwenkbewegung des Werkzeugrahmens 3. Das hydraulische Stellelement 4.1 ist mit dem Hydrauliksystem des Geräts 1 gekoppelt. Alternativ zu einer Ausführung als Hydraulikzylinder kann das Stellelement 4.1 jedoch auch als elektrisches oder pneumatisches Stellelement 4.1 ausgebildet sein.

Wie dies ebenfalls in Fig. 2 erkennbar ist, ist eine Stellwegbegrenzung 11 zur Begrenzung des maximalen Stellwegs Uₘₐₓ vorgesehen. Die Stellwegbegrenzung 11 begrenzt den Stellweg U quer zu den Pflanzreihen R. Im Ausführungsbeispiel gemäß Fig. 2 ist die Stellwegbegrenzung 11 als Anschlag an dem Rahmenträger 10 ausgebildet, welcher die Bewegungsfreiheit des Werkzeugrahmens 2 begrenzt. Neben einem mechanischen Anschlag können auch andere Stellwegbegrenzungen 11 zum Einsatz kommen, etwa elektrische Schalter oder Näherungssensoren.

Die Stellwegbegrenzung 11 weist eine Stellwegalarmierung 12 auf, welche das Erreichen der Stellwegbegrenzung 11 und damit des maximalen Stellwegs Uₘₐₓ anzeigt. Die Stellwegalarmierung 12 kann als akustischer oder optischer Alarm ausgebildet sein oder zur Übermittlung eines entsprechenden Signals an die Positionseinstellung 4, insbesondere an die Steuerung 4.2, ausgebildet sein.

Gemäß der Darstellung in Fig. 3, welche eine alternative Ausgestaltung zu einem Verschieberahmen zeigt, weist der Werkzeugrahmen 3 ein Fahrwerk 3.1 zur Einstellung des Stellwegs U auf. Das Fahrwerk 3.1 ist lenkbar, so dass über die Lenkbewegungen eine Bewegung des Werkzeugrahmens 3 relativ zu den Pflanzreihen R erzielt werden kann. Zum Lenken des Fahrwerks 3.1 ist ebenfalls ein Stellelement 4.1 vorgesehen, welches sich zwischen dem Rahmenträger 10 und dem Fahrwerk 3.1 erstreckt, in der Fig. 3 jedoch nicht dargestellt ist.

Alternativ zu einer Einstellbarkeit des Werkzeugrahmens 3 ist auch eine Ausführung denkbar, bei welcher die Behandlungswerkzeuge 2 selbst einstellbar ausgeführt sind. Hierfür können etwa Stellelemente 4.1 zwischen dem Werkzeugrahmen 3 und den die Behandlungswerkzeuge 2 aufnehmenden Werkzeugaufnahmen 2.2 vorgesehen sein. Eine solche Ausführung ist in den Figuren nicht dargestellt. Es ergeben sich jedoch die im Zusammenhang mit dem Gerät 1 erläuterten Vorteile.

Ferner ist eine Ausführung des landwirtschaftlichen Geräts 1 denkbar, bei welcher nicht nur eine Einstellbarkeit des Werkzeugrahmens 3 quer zu den Pflanzreihen R vorliegt, sondern auch längs oder schräg zu den Pflanzreihen R. Eine solche Ausführung kann sich als vorteilhaft erweisen, wenn nicht nur ein Windeinfluss quer zu den Pflanzreihen R, sondern auch in anderen Richtungen kompensiert werden soll.

Alternativ oder zusätzlich zu einer Ausführung als Bodenbearbeitungswerkzeuge 2.1 können die Behandlungswerkzeuge 2 auch als Sprühwerkzeuge zum Ausbringen von Sprühmittel ausgebildet sein. Bei einer solchen Ausführung, welche in den Figuren nicht dargestellt ist, ist die Positionseinstellung 4 derart ausgebildet und eingerichtet, dass die an dem Werkzeugrahmen 3 angeordneten Sprühwerkzeuge im Wesentlichen oberhalb der Pflanzreihen R positioniert werden. Auf diese Weise kann sichergestellt werden, dass das Sprühmittel mittels der Sprühwerkzeuge auf die Nutzpflanzen N, insbesondere auf deren Blattwerk, appliziert werden kann.

Das vorstehend beschriebene landwirtschaftliche Gerät 1 und das Verfahren zur Behandlung von in Pflanzreihen R angebauten Nutzpflanzen N mit einem solchen landwirtschaftlichen Gerät 1 zeichnen sich dadurch aus, dass sich windbedingte Fehlpositionierungen der Behandlungswerkzeuge 2 zuverlässig reduzieren oder sogar vollständig verhindern lassen.

### Bezugszeichenliste

- 1: Gerät
- 2: Behandlungswerkzeug
- 2.1: Bodenbearbeitungswerkzeug
- 2.2: Werkzeugaufnahme
- 3: Werkzeugrahmen
- 3.1: Fahrwerk
- 4: Positionseinstellung
- 4.1: Stellelement
- 4.2: Steuerung
- 5: Pflanzreihensensor
- 6: Windüberwachung
- 7: Windsensor
- 8: Schnittstelle
- 9: Datenquelle
- 9.1: Wetterstation
- 10: Rahmenträger
- 11: Stellwegbegrenzung
- 12: Stellwegalarmierung
- 13: Zugmaschine
- 13.1: Bordelektronik

- F: Fahrtrichtung
- N: Nutzpflanze
- R: Pflanzreihe
- S_{A}: Ausrichtungssignal
- S_{P}: Positionssignal
- Sw: Windsignal
- U: Stellweg
- Uₘₐₓ: maximaler Stellweg
- W: Wind
- WG: Windgeschwindigkeit
- WR: Windrichtung

## Patentansprüche

1. Landwirtschaftliches Gerät zur Behandlung von in Pflanzreihen (R) angebauten Nutzpflanzen (N) mit einem mehrere Behandlungswerkzeuge (2) aufweisenden, quer zu den Pflanzreihen (R) bewegbar ausgebildeten Werkzeugrahmen (3), dessen Position gegenüber den Pflanzreihen (R) über einen ein Positionssignal (S_{P}) bereitstellenden Pflanzreihensensor (5) erfassbar und über eine Positionseinstellung (4) einstellbar ist,
**dadurch gekennzeichnet,**
**dass** die Positionseinstellung (4) mit einer Windüberwachung (6) verbunden ist, welche ein Windsignal (Sw) bereitstellt, das zur Kompensation von Windeinflüssen mit dem Positionssignal (S_{P}) verknüpfbar ist.

2. Landwirtschaftliches Gerät nach Anspruch 1, **dadurch gekennzeichnet, dass** das von der Windüberwachung (6) bereitgestellte Windsignal (Sw) die Windgeschwindigkeit (WG) des auf die Pflanzreihen (R) wirkenden Winds (W), insbesondere die Windgeschwindigkeit (WG) des quer zu den Pflanzreihen (R) wirkenden Anteils des Winds (W), umfasst.

3. Landwirtschaftliches Gerät nach einem der Ansprüche 1 oder 2,
**dadurch gekennzeichnet, dass** die Windüberwachung (6) einen Windsensor (7) zum Messen und/oder eine Schnittstelle (8) zum Erfassen des auf die Nutzpflanzen (N) einwirkenden Winds (W), insbesondere des quer zu den Pflanzreihen (R) wirkenden Anteils des Winds (W), aufweist.

4. Landwirtschaftliches Gerät nach Anspruch 3, **dadurch**
**gekennzeichnet, dass** die Schnittstelle (8) zur Kommunikation mit einer oder mehreren externen Datenquellen (9), insbesondere Wetter-Datenquellen, ausgebildet ist.

5. Landwirtschaftliches Gerät nach einem der vorhergehenden Ansprüche, **dadurch gekennzeichnet, dass** der Werkzeugrahmen (3) über die Positionseinstellung (4) quer zu den Pflanzreihen (R) um einen Stellweg (U) gegenüber einem Rahmenträger (10) einstellbar ist.

6. Landwirtschaftliches Gerät nach Anspruch 5, **dadurch**
**gekennzeichnet, dass** die Positionseinstellung (4) zur Bestimmung des Stellwegs (U) aus dem Positionssignal (S_{P}) und dem Windsignal (Sw) ausgebildet ist.

7. Landwirtschaftliches Gerät nach einem der Ansprüche 5 oder 6,
**dadurch gekennzeichnet, dass** die Positionseinstellung (4) zur Bestimmung des Stellwegs (U) aus einem Ausrichtungssignal (S_{A}) des landwirtschaftlichen Geräts (1) und/oder einer Zugmaschine (13) ausgebildet ist.

8. Landwirtschaftliches Gerät nach einem der vorhergehenden Ansprüche, **dadurch gekennzeichnet, dass** die Positionseinstellung (4) ein Stellelement (4.1) zur Einstellung, insbesondere zur stufenlosen Einstellung, der Position des Werkzeugrahmens (3) aufweist.

9. Landwirtschaftliches Gerät nach Anspruch 8, **dadurch gekennzeichnet, dass** das Stellelement (4.1) als hydraulisches, pneumatisches oder elektrisches Stellelement ausgebildet ist, welches zwischen dem Rahmenträger (10) und dem Werkzeugrahmen (3) oder zwischen dem Rahmenträger (10) und einem lenkbaren Fahrwerk (3.1) des Werkzeugrahmens (3) oder zwischen dem Werkzeugrahmen (3) und einer Werkzeugaufnahme (2.2) der Behandlungswerkzeuge (2) angeordnet ist.

10. Landwirtschaftliches Gerät nach einem der vorhergehenden Ansprüche, **dadurch gekennzeichnet, dass** die Positionseinstellung (4) eine Steuerung (4.2) zur automatischen Einstellung des Werkzeugrahmens (3) oder der Werkzeugaufnahme (2.2) aufweist.

11. Landwirtschaftliches Gerät nach einem der vorhergehenden Ansprüche, **dadurch gekennzeichnet, dass** der Pflanzreihensensor (5) zur berührungslosen, insbesondere zur optischen Erfassung der Pflanzreihen (R) ausgebildet ist.

12. Landwirtschaftliches Gerät nach Anspruch 11, **dadurch gekennzeichnet, dass** der Pflanzreihensensor (5) zur Erfassung der Art und/oder der Anzahl und/oder der Abmessungen der in den Pflanzreihen (R) angebauten Nutzpflanzen (N) ausgebildet ist.

13. Landwirtschaftliches Gerät nach einem der Ansprüche 11 oder 12, **dadurch gekennzeichnet, dass** die von dem Pflanzreihensensor (5) erfassten Sensordaten zur Erzeugung des Positionssignals (S_{P}) mit Datenbankinformationen betreffend die Abmessungen, die Art und das Entwicklungsstadium der Nutzpflanzen (N) verknüpfbar sind.

14. Landwirtschaftliches Gerät nach einem der Ansprüche 11 bis 13, **dadurch gekennzeichnet, dass** das Positionssignal (S_{P}) in Abhängigkeit der erfassten Abmessungen, der Art und/oder des Entwicklungsstadiums der Nutzpflanzen (N) erzeugbar ist.

15. Landwirtschaftliches Gerät nach einem der vorhergehenden Ansprüche, **dadurch gekennzeichnet, dass** die an dem Werkzeugrahmen (3) angeordneten Behandlungswerkzeuge (2) als Bodenbearbeitungswerkzeuge (2.1) ausgebildet sind.

16. *Landwirtschaftliches Gerät nach Anspruch 15, **dadurch gekennzeichnet, dass** die Positionseinstellung (4) derart ausgebildet und eingerichtet ist, dass die an dem Werkzeugrahmen (3) angeordneten Bodenbearbeitungswerkzeuge (2.1) zur Bearbeitung des Bodens im Wesentlichen mittig zwischen den Pflanzreihen (R) oder auf die Pflanzreihen (R) positionierbar sind.*

17. Landwirtschaftliches Gerät nach einem der Ansprüche 1 bis 14, **dadurch gekennzeichnet, dass** die Behandlungswerkzeuge (2) als Sprühwerkzeuge zur Ausbringung von Sprühmittel, insbesondere zur bandartigen Ausbringung von Sprühmittel, ausgebildet sind.

18. Verfahren zur Behandlung von in Pflanzreihen (R) angebauten Nutzpflanzen (N) mit einem landwirtschaftlichen Gerät (1), welches einen mehrere Behandlungswerkzeuge (2) aufweisenden Werkzeugrahmen (3) aufweist, dessen Position gegenüber den Pflanzreihen (R) über einen ein Positionssignal (S_{P}) bereitstellenden Pflanzreihensensor (5) erfasst wird und über eine Positionseinstellung (4) eingestellt wird,
**dadurch gekennzeichnet,**
**dass** eine mit der Positionseinstellung (4) verbundene Windüberwachung (6) ein Windsignal (Sw) bereitstellt, das zur Kompensation von Windeinflüssen mit dem Positionssignal (S_{P}) verknüpft wird.
